Europäisches Patentamt

European Patent Office

Office européen des brevets

(11) Publication number: **0 274 376**
**A2**

# EUROPEAN PATENT APPLICATION

(21) Application number: **88100020.2**

(22) Date of filing: **04.01.88**

(51) Int. Cl.⁴: **G 06 F 15/68**

(30) Priority: **08.01.87 JP 2289/87    12.01.87 JP 4658/87**
**22.01.87 JP 13201/87**
**29.01.87 JP 19458/87**

(43) Date of publication of application:
**13.07.88  Bulletin  88/28**

(84) Designated Contracting States:
**DE FR GB IT NL SE**

(71) Applicant: **EZEL INC.**
**Nihonseimei Yotsuya Bldg. 16-2, Samon-cho**
**Shinjuku-ku Tokyo 160  (JP)**

(72) Inventor: **Kumagai, Ryohei**
**5-8-19-207 Ochiai Tama-City**
**Tokyo  (JP)**

(74) Representative: **Patentanwälte Grünecker, Kinkeldey,**
**Stockmair & Partner**
**Maximilianstrasse 58**
**D-8000 München 22  (DE)**

(54) Image processing system.

(57) An image processing system, comprising an input portion to which pixel data is inputted, a convolution processing portion processing each set of pixels in a predetermined convolution area so as to output a processed data by every predetermined convolution area, a computational portion for calculating a parameter necessary for a image processing according to the processed data from the convolution processing portion and a converting portion which comprises a selecting means, to which the output of the computational portion is inputted, a high speed memory to which the output of the selecting means is inputted and a lightly computaional portion for lightly computation to which the output of the high speed memory is inputted and the output of which is inputted to the selecting means.

Fig.1

| input portion | convolution processing portion | computational portion | converting portion |
|---|---|---|---|
| 1 | 2 | 3 | 4 |

**Description**

IMAGE PROCESSING SYSTEM

**BACKGROUND OF THE INVENTION**

Field of The Invention

The present invention relates to a digital image processing system, particularly to an image processing system effective for image processing, displaying or image analizing in real-time.

Description Of Related Invention

The word "image processing" includes wide meaning, that is the meaning of technology of narrow sense i.e., clarifying inputted picture or recognizing picture by abstracting characteristics, the meaning of computer graphics technology, and the meaning of special effect technology of chrome-keying, frame composition, frame division and so forth used in the broadcasting system. There are analogue type, digital type or composite type of analogue and digital type in the image processing system. The digital type image processing system is regarded as the most important because of its fineness of processed data, reappearance, stability in information and variety of processing manner. However, the digital type image processing system processes an image as an aggregation of a lot of pixels. Immense calculation steps and times are needed in order to process sufficient number of pixels with sufficient graduation, and relationship therebetween, for practical use as design use, broad-casting use, etc.

In the case of measurement of particle-size distribution in a picture of 512x512 pixels and graduation of 8 bits for each primary colors of red (R), green (G) and blue (B), it takes about 20 minutes calculation period for one frame by a personal computer for general purpose with calculation processor. Even when using a super-computer of 20 MIPs, it take for this calculation several seconds of processing period.

In order to solve such problem of long calculation period, special-purpose integrated circuits (ICs) are proposed. A cathode ray tube controller (CRTC) for affine transformation or displaying of a picture, and an integrated circuit for image analizing of predetermined number of pixels are proposed. These special purpose ICs are applicable to a narrow field of image processing. The system including such IC has low cost-performance because of its narrowly restricted application. Since the ICs are designed without considering the cooperation with other ICs particularly of other companies, it is substantially impossible to construct a multi-purpose image processing system by using a plurality of such ICs.

Some special-purpose hardware system is designed for special manufacturing lines. Such system is usually useful for only one purpose and restricted in operating condition. When the condition is not appropriate, frequent measurement errors occurs or measurement becomes impossible. Newly improved image processing algorithms can not be introduced to such systems due to their lack of flexibility.

**SUMMARY OF THE INVENTION**

The present invention is based on a concept that the image processing comprises steps of convolution processing step in which pixel data are maintained in groups, preparation step applicable to various processing, and converting step to obtain the final processed image or characteristics value according to the result of the preparation. According to the present invention, the preparation of numerical computation and status computation are took place in a computational portion, while, the referring of table, multiplication, integration of the result of light calculation and the temporal accumulation of intermittent information are took place in a converting portion.

The computational portion comprises numerical computational portion and status computational portion. In the numerical computational portion, the graduation, density or RGB level of pixels are calculated as an parameter so that, for example, mean density is obtained. In the status computational portion, each pixel is evaluated so that, for example, it is determined whether the pixel is to be processed or not, the determination is indicated as a 1 bit information and the neighborhood information is generated.

The converting portion comprises a high speed memory with a feedback line from the output thereof to input thereof and a lightly computational portion provided on the above feedback line. Output of the high speed memory is occasionally introduced through the lightly computational portion to the input of the high speed memory. By changing the processing manner of the lightly computational portion, various kinds of conversion is realized in spite of not heavily computational performance of the lightly computational portion, very high speed conversion is realized due to the light computational load. In the computational portion, by dividing the numerical computational portion for a few bits calculation with evaluation and the status computational portion for not a few bits calculation from each other, the calculation is executed efficiently in high speed.

The numerical computational portion comprises a multiplication portion for multiplying each pixel data by a multiplier, a selector for distributing or introducing the output of the multiplication portion to adequate outputs, and a integration portion for integrating the output of the selector so as to obtain a calculation result. The numerical computational portion is based on a concept that the most of the image processing operation, such as addition or multiplication of space factor, or space filter has characteristics of isotropy and symmetry. According to this concept, the output of the multiplication portion is similarly distributed by means of a selector so that the number of multiplication modules in the multiplication portion, in which a lot of logical gates are needed, is minimized so as to optimize the gate efficiency and to realize the high flexibility and wide application field.

Therefore, the object of the present invention is to provide an image processing system with wide application field, which processes in higher process speed than a general-purpose super computer, and which is high in cost performance.

## BRIEF DESCRIPTION OF THE DRAWINGS

Fig.1 shows a general block diagram of the first embodiment of an image processing system according to the present invention;

Fig.2 shows the pixels aligned and included in a picture displayed;

Fig.3 shows a 3x3 convolution group of pixels in a picture;

Fig.4 shows a general block diagram of an embodiment of a convolution processing portion;

Fig.5 shows a general block diagram of an embodiment of a computational portion;

Fig.6 is a block diagram showing the relationship between the computational portion and converting portion;

Fig.7 shows a block diagram of the first embodiment of the computational portion;

Fig.8 shows a variation of the embodiment in Fig. 7;

Fig.9 shows the second embodiment of the computational portion;

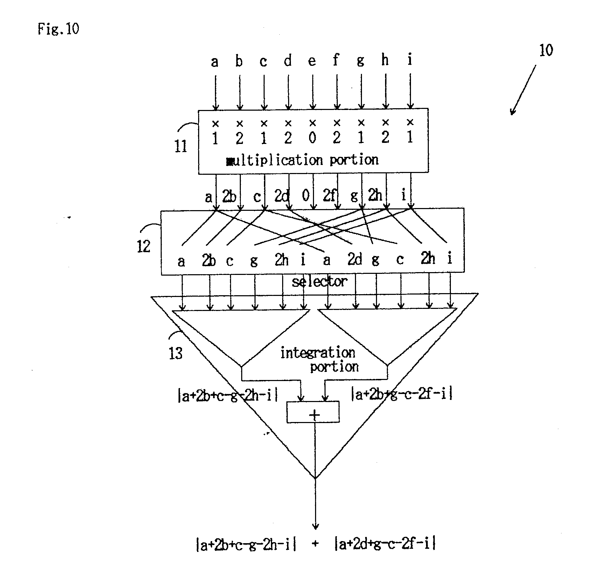

Fig.10 shows the third embodiment of the computational portion;

Figs.11 and 12 show block diagrams of calculation modules in a integration portion;

Fig.13 shows the forth embodiment of the computational portion;

Fig.14 shows a block diagram of the first embodiment of a converting portion;

Fig.15 shows the second embodiment of the converting portion;

Fig.16 shows the third embodiment of the converting portion;

Fig.17 shows the forth embodiment of the converting portion;

Fig.18 to 21 show various lightly calculation portions;

Fig.22 shows a variety of the combination of the embodiment in Fig.5;

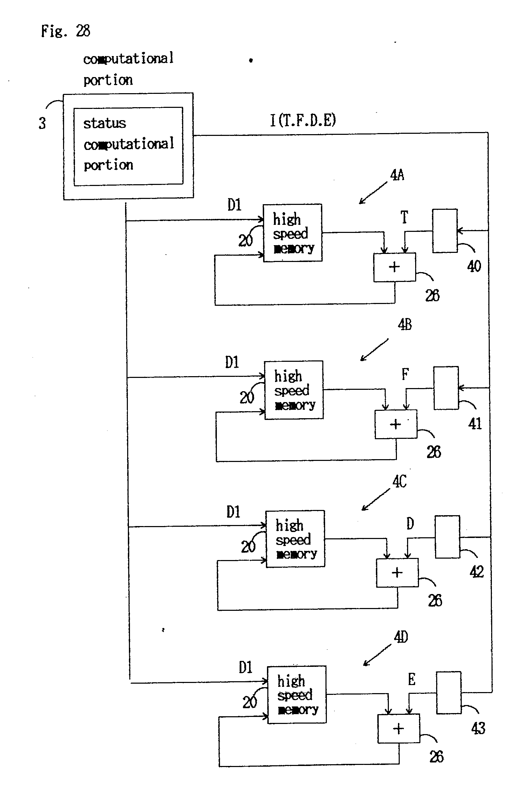

Figs.23 to 28 show other embodiments base on the embodiment in Fig.5; and

Fig.29 shows the second embodiment of the image processing system.

## DETAILED DESCRIPTION OF PREFERRED EMBODIMENT

Hereinafter, preferred embodiments of the image processing system according to the present invention are detailedly described.

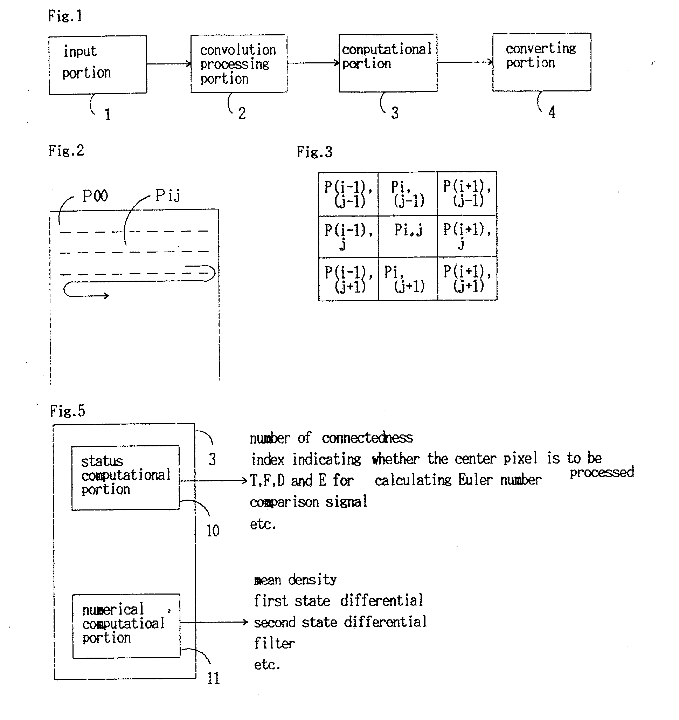

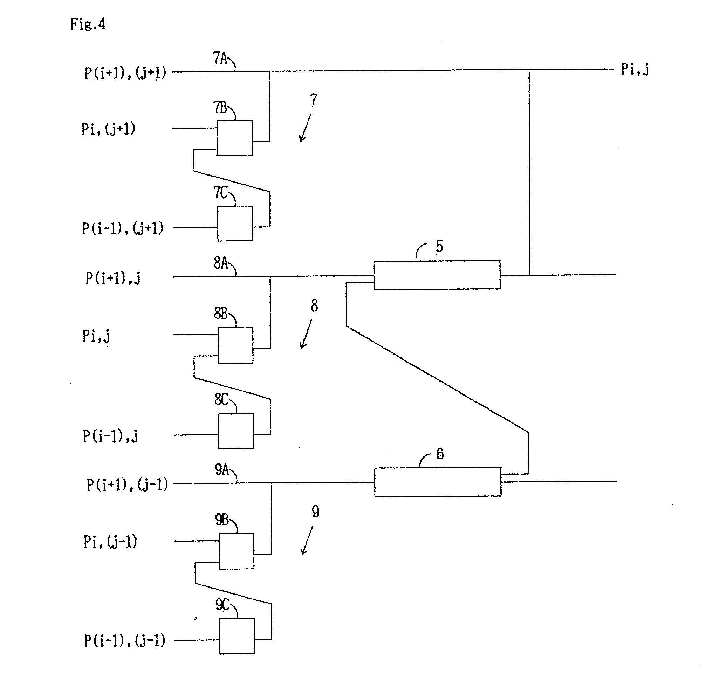

In Fig.1, the image processing system includes an input portion 1, to which the pixel data is inputted. The pixel data is introduced from the input portion 1 to a convolution processing portion 2, a computational portion 3 and a converting portion 4, successively. As shown in Fig.2, the pixel data Pij are aligned on each raster, while the convolution processing portion 2 maintains a predetermined 3x3 convolution data of P(i-1), (j-1), Pi,(j-1), P(i+1),(j-1), P(i-1),j, Pi,j, P(i+1),j, P(i-1), (j+1), Pi,(j+1), p(i+1),(j+1), as one matrix data. For this process, for example, the circuit in Fig.4 is effective. The circuit has a couple of line memories 5 and 6 for two adjacent rasters, which are connected in series. The pixel data Pij first inputted to the first line memory 5. The input and output of the first line memory 5 and the output of the second line memory 6 are connected to delay portions 7, 8 and 9, respectively. The delay portion 7 includes a line 7A through which the data passes, a first D flip-flop 7B which delays the input data by one clock, and a second D flip-flop 7C delays the output of the flip-flop 7 B by one clock, so that 3 serial pixel data are simultaneously outputted. The delay portions 8 and 9 are similarly constructed as the delay portion 7, constructed out of the similar elements of lines 8A and 9A, D flip-flops, 8B, 8C, 9B and 9C, so that a plurality of serial pixel data are maintained and simultaneously outputted. When a series of pixel data are inputted to the first line memory 5 successively, first, the leading 3 pixel data P(i-1),(j-1), Pi,(j-1), P(i+1),(j-1) are introduced to the first line memory 5, second, these data are transmitted to the next line memory 6 when 3 data P(i-1),j, Pi,j, P(i+1),j on the next raster are introduced to the first line memory 5. The next pixel data P(i-1),(j+1), Pi,(j+1), P(i+1), (j+1) on the next raster corresponding to the above two groups of 3 data are directly introduced to the delay portion 7 without introduced to the line memory 5. In the delay portion 7, the data P(i-1), (j+1) is once maintained in the D flip-flop 7C and then outputted therefrom, simultaneously, the data Pi,(j+1) which is already maintained is outputted from the flip-flop 7B, as well as the data P(i+1),(j+1) is outputted from the line 7A. While, the data P(i-1),j, Pi,j, P(i+1),j introduced to the line memory 5 are simultaneously outputted from the D flip-flop 8C and 8B and line 8A of the delay portion 8, as well as, the data P(i-1),(j-1), Pi,(j-1) and P(i+1),(j-1) are simultaneously outputted from the D flip-flops 9C and 9B and line 9A of delay portion 9. Therefore, the convolution processing portion 2 maintains 3x3 pixel data. The convolution size may be changed to smaller size of 2x2 and so forth, or to greater size. Other configuration of convolution may also be selected than the configuration of a square. The convolution portion may have a performance of light calculation, such as calculation of mean density.

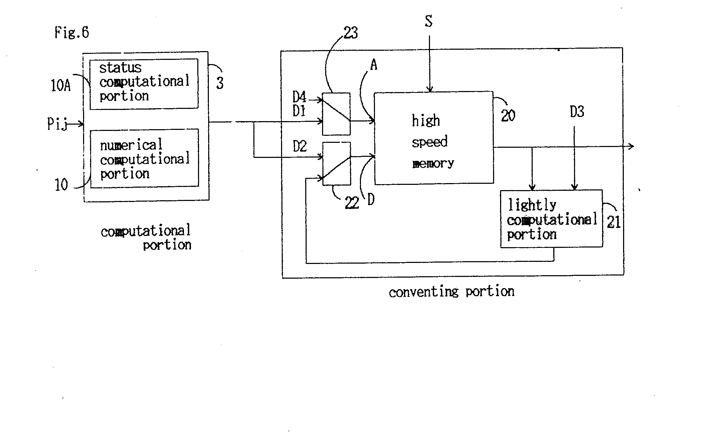

The data outputted from the convolution portion 2 is introduced to the computational portion 3 which calculates parameters necessary for image processing. Since the mean density above is one of such necessary parameter, it may be calculated within the computational portion 3. The computational portion comprises at least either of status computational portion 10A or numerical computational portion 10, as shown in Fig.6. In the status computational portion, the number of connectedness, the index indicating whether the pixel is to be processed or not, T, F, D and E for calculating Euler number, and comparison signal indicating the difference and relationship between the center pixel and adjacent pixels around the center pixel. In the numerical computational state differential, filtering, etc. are took place. Since the computational portions 10 and 11 operate in a manner of hardware pipe-line processing, as a whole the computational portion 3 processes computation in high speed.

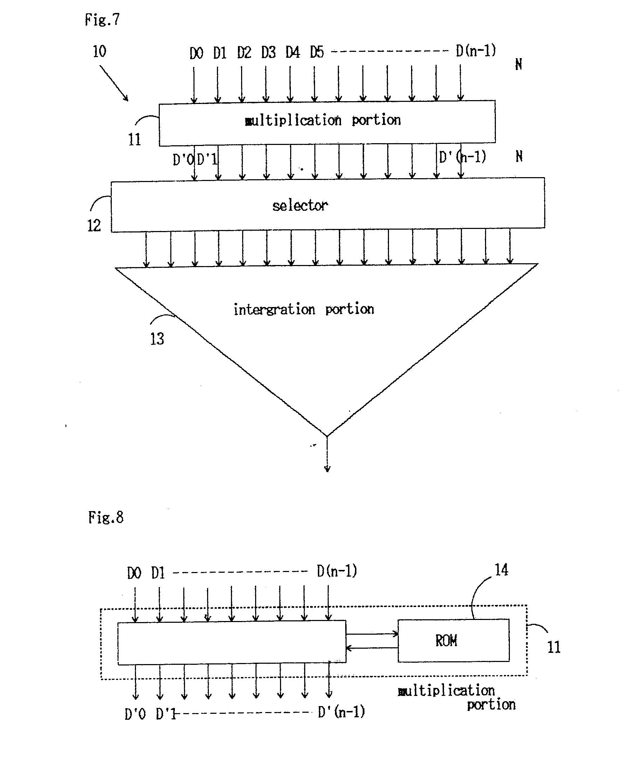

In Fig.7, the numerical computational portion 10 of the computational portion 3 comprises a multiplication portion 11, a selector 12 and an integration portion 13, which are connected successively. The multiplication portion 11 has N inputs for data D0, D1, ..., D(n-2) and D(n-1), which are respectively multiplied by multiplier of A0, A1, ..., A(n-1) in the portion 11 so as to generate outputs D'0, D'1, ..., D'(n-1), the number of which is equal to that of the input. The result of the multiplication $D'i = AixDi$ may be obtained by reading data from a ROM 14 in which the multiplication result is already accumulated, as shown in Fig. 8. The selector 12 has inputs similar in number to that of multiplication lines, and has outputs number of which is N equal to that of inputs or N' more than that of inputs. The selector 12 introduces each multiplication result to any one of outputs thereof or distributes any one of inputs to any plurality of outputs. The integration portion 13 has inputs of N or N' similar in number of outputs of selector 12. The multiplication results introduced to the inputs are integrated by adding, subtracting or any other calculation in the integration portion 13. Since a module for multiplication usually consists of a lot of logical gates, it is better to decrease the number of modules of multiplication, in order to improve total gate efficiency of a system. In this embodiment, since the number of the multiplication modules is minimized to be the number equal to that of inputs, the circuit is constructed as simple as possible. According to inventor's long experience, the same input parameter is never multipled by numerics with different absolute value in practical image processing. Therefore, the inventor found it possible to construct a optimized circuit with inputs similar in number to the inputs. Since the selector 12 introduces each inputted parameters to any one of the inputs of integration portion 13 and distributes each parameter to any inputs of integration portion, a lot of sorts of image processing manner may be executed without modifying the integration portion. The computational portion has an architecture of pipe-line processing. When the multiplication result is transmitted to the selector 12, the next parameters are inputted to the multiplication portion 11. In order to improve the process speed of the multiplication portion. Wallace-tree circuit or modified array-logic circuit or any other high speed multiplication circuit, and an architecture of pipe-line processing may be employed. The selector 12 transmits the result of the multiplication to the integration portion. The integration portion 13 has an architecture of hiearchical pipe-line processing in which various calculations are parallelly and simultaneously excuted on each hiearchy, and the calculation results are transmitted to the next hiearchy. The numerical computational portion as a whole is much improved in process speed by this pipe-line architecture.

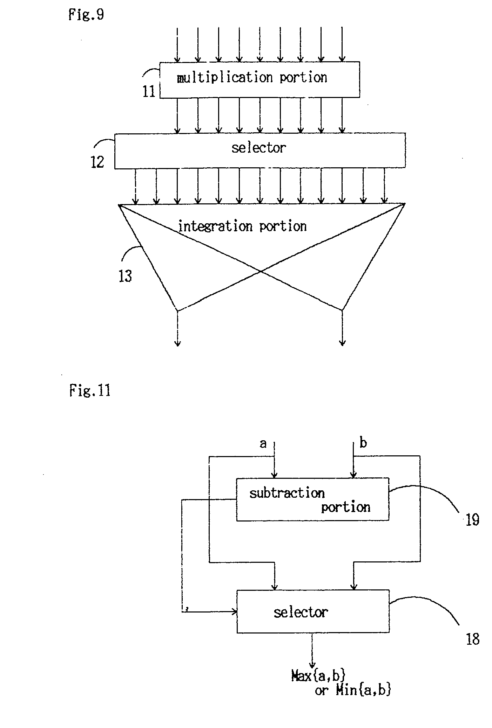

Fig.9 shows the second embodiment of the numerical computational portion, in which the integration portion 12 is constructed so as to generate two different outputs from each other., The integration portion may constructed so as to distribute or output the data in the midway of the integration portion. A plurality of outputs may easily be generated from the integration portion.

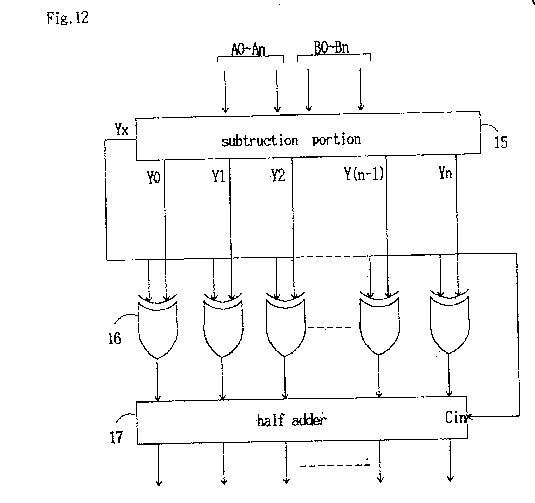

Fig.11 shows the third embodiment of the present invention, showing the performance of the calculation circuit when the SOBEL operator is calculated. The pixel data inputted is the pixel data of 8 adjacent pixels (upper, lower, right, left, upper right, upper left, lower right and lower left) in the 3x3 convolution area. In the multiplication portion 11 each parameter is multiplied by the following multiplier.

Table 1.   The muliplier of SOBEL operator

| parameter | a | b | c | d | e | f | g | h | i |
|---|---|---|---|---|---|---|---|---|---|
| multiplier | 1 | 2 | 1 | 2 | 0 | 2 | 1 | 2 | 1 |

The result of the multiplication is inputted to the selector 12 which introduces or destributes the multiplication result to 12 output terminals, which is designated by reference numerics of one to twelve in Table 2. The value derived by each output terminal is shown below. The values derived to the terminals 1 to 6 and the values derived to the terminals 7 to 12 are integrated, respectively. Then both result of integration are further integrated.

### Table 2. The process of calculation of SOBEL operator

| output terminal | 1 | 2 | 3 | 4 | 5 | 6 | 7 | 8 | 9 | 10 | 11 | 12 |
|---|---|---|---|---|---|---|---|---|---|---|---|---|
| derived value | a | 2b | c | g | 2h | i | a | 2d | g | c | 2h | i |
| result of integration 1 | | $\lvert a+2b+c-g-2h-i\rvert$ | | | | | | $\lvert a+2d+g-c-2f-i\rvert$ | | | | |
| result of integration 2 | | | $\lvert a+2b+c-g-2h-i\rvert + \lvert a+2d+g-c-2f-i\rvert$ | | | | | | | | | |

In integration portion, addition, subtraction, calculation of the absolute value of the difference, maximum abstracting, minimum abstracting, sign inversions, bit sifting, etc. are excuted. The circuits for the above calculation are constructed, for example, as shown in Fig.11 and Fig.12. Fig.12 shows a circuit calculating the absolute value of the difference. To a subtracter 15, the output of an EX-OR (exclusive or) gate 16 is connected, the output of which is connected the input of a half adder 17. To the subtracter 15, 2 sets of $(n+1)$ bits data, A0 to An and B0 to Bn, are inputted and the difference therebetween is outputted. To each EX-OR gates 16, the output of each bit of subtractor 15 and the sign bit Yx is inputted. The Yx is inputted to Cin---the carry-in of half-adder 17. When sign bit Yx is "1", that is to say, the output of subtracter 15 is minus, each output bits Y0 to Yn are inverted, then the sign bit "1" is added to the inverted result, which is equal to the input value with its sign inverted, is outputted. Therefore, the absolute value is found out. Conversely, when the sign is plus, the output of subtracter isn't inverted because the sign bit is "0". The absolute value is found out in this way. Fig.11 shows a circuit abstracting maximum and minimum, in which a selector 18 is connected to the output side of a subtracter 19. To the selector 18, the parameters a and b which are to be compared therein and the value of the result of subtraction (a-b) are inputted. A or B is outputted alternatively from the selector 18 according to the sign of the result of subtruction (a-b). In the case of abstracting maximum, a is inputted when the sign is plus or zero and b is inputted when the sign is minus. Conversely, in the case of abstracting minimum, b is outputted when the sign is plus and a is outputted when the sign is minus or zero.

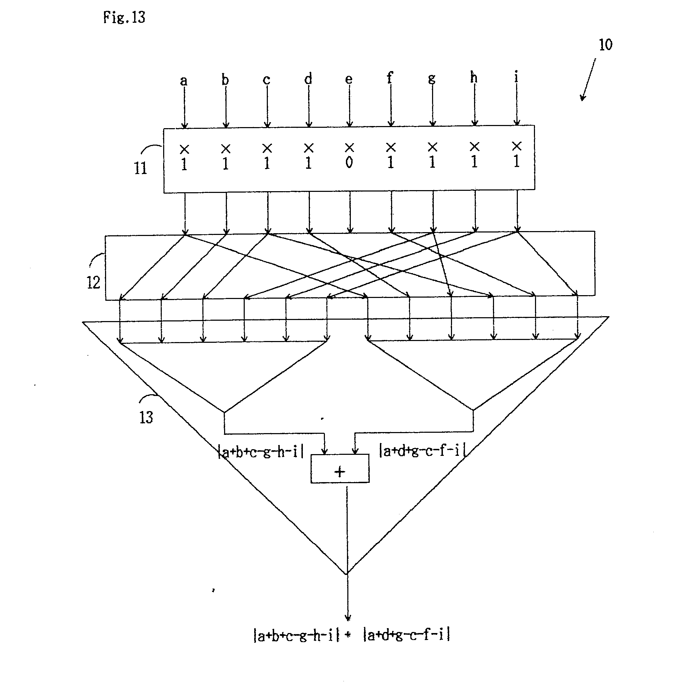

Fig.13 shows the fourth embodiment. The multipliers, the values derived to each output terminal and the result of integration 1 and 2 are as follows;

### Table 3. Mutipliers of PREWITT operator

| parameter | a | b | c | d | e | f | g | h | i |
|---|---|---|---|---|---|---|---|---|---|
| multiplier | 1 | 1 | 1 | 1 | 0 | 1 | 1 | 1 | 1 |

### Table 4. The process of calculation PREWITT operator

| output terminal | 1 | 2 | 3 | 4 | 5 | 6 | 7 | 8 | 9 | 10 | 11 | 12 |
|---|---|---|---|---|---|---|---|---|---|---|---|---|
| derived value | a | b | c | g | h | i | a | 2b | g | c | 2h | i |
| result of integration 1 | | $\lvert a+b+c-g-h-i\rvert$ | | | | | | $\lvert a+d+g-c-f-i\rvert$ | | | | |
| result of integration 2 | | | $\lvert a+b+c-g-h-i\rvert + \lvert a+d+g-c-f-i\rvert$ | | | | | | | | | |

The PREWITT operator is calculated by the operation shown in the above Table.

The followings show, as tables, the multipliers concerning the various operations, the values derived by each output terminal and result of integration.

Table 5.  The multiplier of Laplacian

| parameter | a | b | c | d | e | f | g | h | i |
|---|---|---|---|---|---|---|---|---|---|
| multiplier | 0 | 1 | 0 | 1 | 4 | 1 | 0 | 1 | 0 |

Table 6.  The process of operation of Laplacian

| output terminal | 1 | 2 | 3 | 4 | 5 | 6 | 7 | 8 | 9 | 10 | 11 | 12 |
|---|---|---|---|---|---|---|---|---|---|---|---|---|
| derived value | – | b | – | d | 4e | f | – | h | – | – | – | – |
| the result of integration | | | | | | $|b+d-4e+f+h|$ | | | | | | |

Table 7.  The multiplier for the shapening

| parameter | a | b | c | d | e | f | g | h | i |
|---|---|---|---|---|---|---|---|---|---|
| multiplier | 0 | 1 | 0 | 1 | 5 | 1 | 0 | 1 | 0 |

### Table 8. The process of operation of shapening

| output terminal | 1 | 2 | 3 | 4 | 5 | 6 | 7 | 8 | 9 |
|---|---|---|---|---|---|---|---|---|---|
| derived value | | - | b | - | d | 5e | f | - | g | - |
| the result of integration | $|-b-d+5e-f-g|$ | | | | | | | | |

### Table 9. The first modification of the second state differential

| parameter | a | b | c | d | e | f | g | h | i |
|---|---|---|---|---|---|---|---|---|---|
| multiplier | 1 | 1 | 1 | 1 | 8 | 1 | 1 | 1 | 1 |

### Table 10.
### The process of operation of the above second state differential

| output terminal | 1 | 2 | 3 | 4 | 5 | 6 | 7 | 8 | 9 |
|---|---|---|---|---|---|---|---|---|---|
| derived value | a | b | c | d | 8e | f | g | h | i |
| result of integration | $|a+b+c+d-8e+f+g+h+i|$ | | | | | | | | |

### Table. 11
### The second modification of the second state differential

| parameter | a | b | c | d | e | f | g | h | i |
|---|---|---|---|---|---|---|---|---|---|
| multiplier | 1 | 2 | 1 | 2 | 4 | 2 | 1 | 2 | 1 |

### Table 12.
### The process of operation
### of the second differential of the second modification

| output terminal | 1 | 2 | 3 | 4 | 5 | 6 | 7 | 8 | 9 |
|---|---|---|---|---|---|---|---|---|---|
| derive value | a | 2b | c | 2d | 4e | 2f | g | 2h | i |
| the result of integration | $|a-2b+c-2d+4e-2f+g-2h+i|$ | | | | | | | | |

In the case of smoothing of a picture, each value of neighbor pixels are multiplied by "1", the value of the pixel to be processed are wighted by a multiplier of 1 or more than 1, and total value of the pixels of the center

7

**0 274 376**

and the neighbors is averaged. The processes of these calculation are excuted in the manner same as the manner described above.

As described above, the computational portion 3 has the status computational 10A portion independent from the numerical computational portion 10. The status computational portion 10A evaluates each pixel data Pij as follows:

  a) Whether the pixel Pij is to be processed or not;
  b) Which pixel of 8 neighbor pixels around PiJ has same value or not as that of Pij;
  c) How many pixels of 8 neighbor pixels around Pij have same value as that of Pij;
  d) The parameters T, F, D and E for calculating Euler number according to the relationship between Pij and 8 neighbor pixel around Pij (T, F, D and E are defined as the number of predetermined configurations in convolutions, respectively. For judgement of the configuration, each couple of adjacent pixels are compared, first); and so forth.

Hereinafter, preferred embodiments of converting portion 4 are described according to attached drawings.

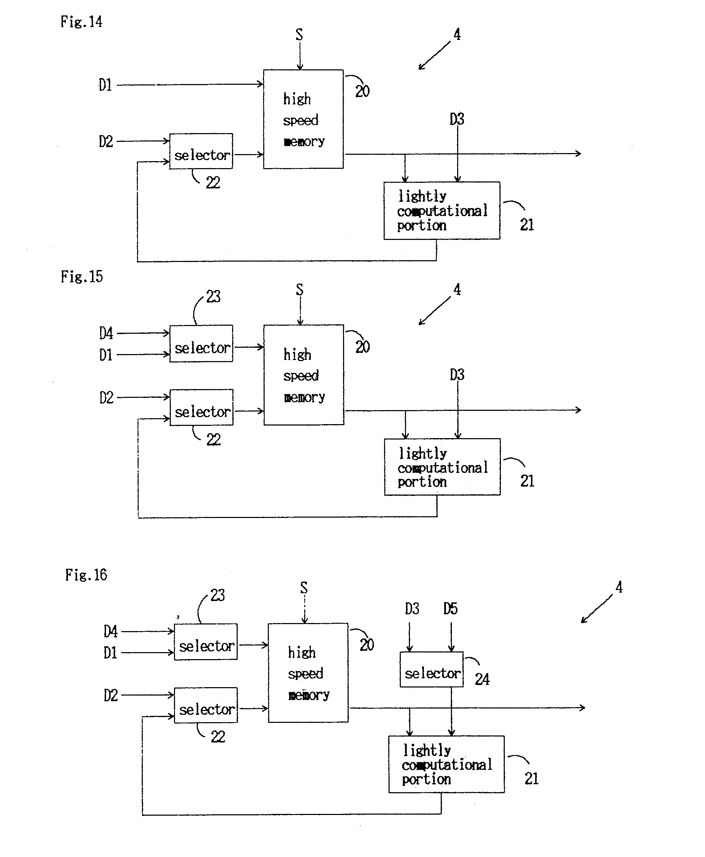

In Fig. 14, the converting portion 4 comprises a high speed memory 20 and a lightly computational portion 21 connected to a branch of the output of the high speed memory 20. The output of the computational portion 21 is fed back to the input of the high speed memory 20. To the input of the high speed memory 20, a selector 22 is connected, to which the output of the computational portion 21 is connected. Data D1 is inputted to the address input of the memory 20, while the output of the selector 22 is connected to the data of the memory 20. Data D2 is inputted to the input of the selector 22 parallel to the output of the computational portion 21. Data D2 is inputted, for example, from the computational portion 3, as shown in Fig.6. The selector 22 selects alternatively the output of the computational portion 21 or the data D2 so as to introduce the selected to the memory 20. As the high speed memory 20, a static RAM (read only memory) may be employed. When the data, outputted from the memory 20 and processed in the computational portion 21, is fed to the input of the memory 20, data may be repeatedly calculated in the same manner, or a group of data may be successively accumulated in the memory 20 after the processing in the computational portion 21. Integration of data, repeated decreasing, successive comparison of data or any other various processing are possible. The converting portion 4 may naturally be applicable, because it includes a memory 20, to a table from which data accumulated on each address is readable when the address is designated by the data D1. To the memory 20, signals of CS (chip select) and WE (write enable) are inputted, for example, in order to control the memory 20 to change the mode of reading and writing, as the conventional memory. These signals are represented by S in Fig.14. The control is effective for writing pixel data, which have predetermined characteristics, into the memory 20, for example, pixels' data are integrated except for pixels' data of "0".

Data D3 is inputted occasionally to the computational portion 21 so that the calculation manner in the portion 21 is, for example, determined, so that a value to be added to the output of the memory 20 is determined when addition is excuted in the portion 21.

The number of inputs of the selector 22 may be increased so that the converting portion 4 is extended in performance.

Fig.15 shows the second embodiment of the converting portion, in which, in addition to the construction of the first embodiment, a selector 23 is connected to the adddres input of the memory 20 and the data D1 is inputted to the selector 23. Data D4 is further inputted to the selector 23 which selects the data D1 or D4, alternatively. Data D4 is inputted, for example, from the computational portion 3, as shown Fig.6. The converting portion 4 is extended in performance when the data to the address input are selectable. It is necessary for changing the address control from the local bus to main bus when the processing of the memory 20 is excuted on the local bus and the processing of the processed result is transmitted to the main bus. Also when the memory 20 is used as a table, different data lines are needed from each other for writing data into the table and for referring data already written, so the selector 23 is necessary. The more the number of inputs of selects 23, the wider the converting portion's extention.

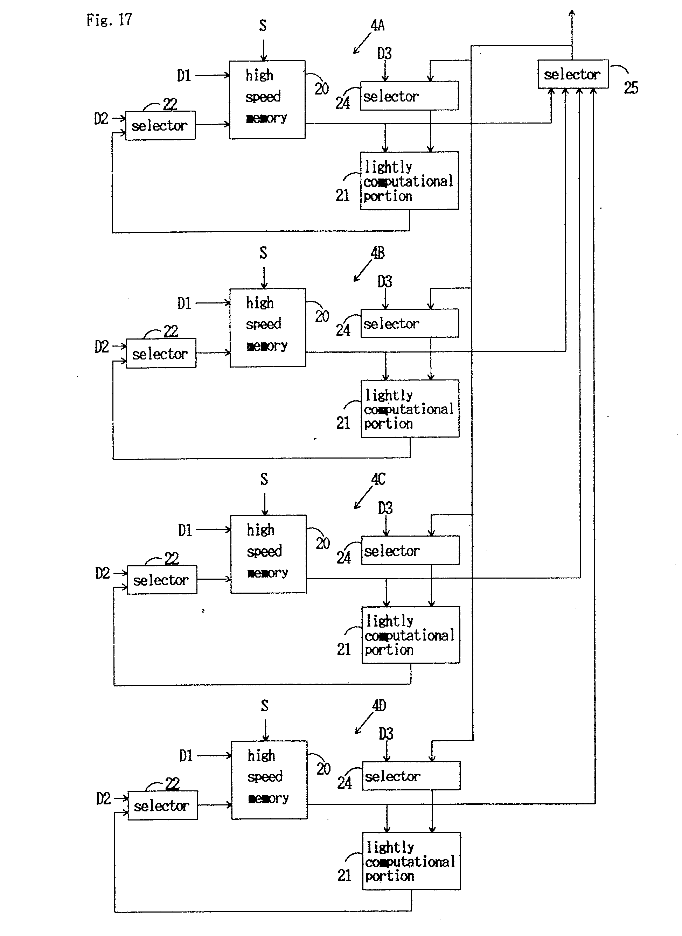

Fig.16 shows the third embodiment of the converting portion, a selector 6 is connected to the data input of the computational portion 21 in addition to the construction of the second embodiment. The data D3 is inputted to the selector 24. Data D5 is further inputted to the selector 24 which selects data D3 or D5 alternatively. The more data selectable, the wider the converting portion has expansion. By selecting data in selector 24, it is possible to transmit data from one converting portion to the other or to feed the data back to the input of the converting portion, as shown in Fig.17.

In Fig.17, a plurality of converting portions 4A, 4B, 4C and 4D, each of which is similar to the converting portion in Fig.16 except for that the selector 23 is not shown for easy understanding, have outputs commonly connected to a selector 25. A branch of the output of the selector 25 is connected to the input of the selector 24 so that any one of outputs of the converting portion may be introduced to the input of the computational portion 21, so that the output of a converting portion may be fed back to the computational portion of the same converting portion, and so that the output of a converting portion may be fed through another converting portion back to the same converting portion. Therefore, a lot of sorts of converting manner are realized.

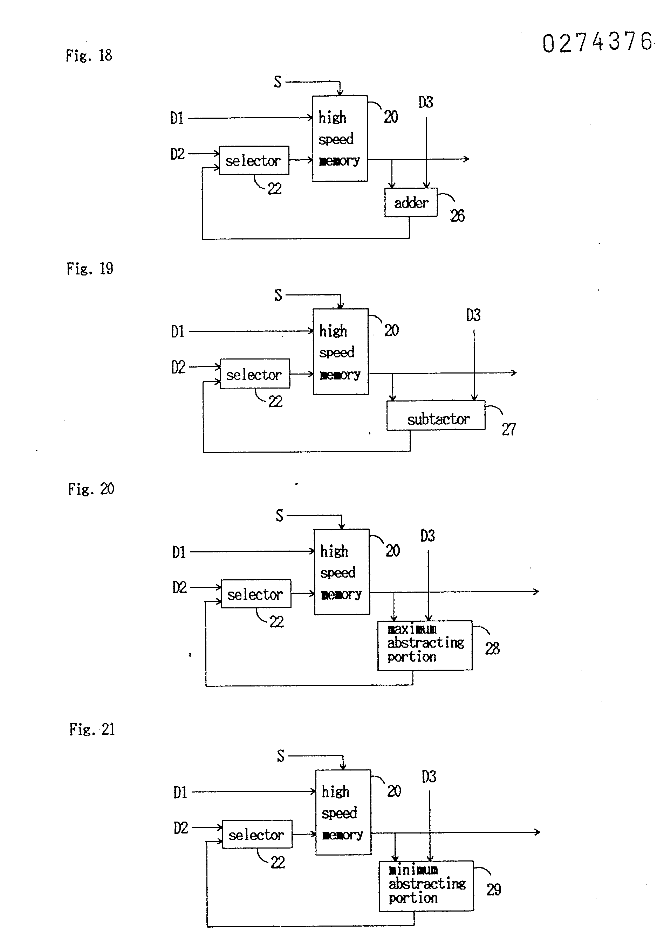

Figs.18 to 21 show the embodiments of the lightly computational portion in the converting portion in Fig.14.

The computational portion in Fig.18 is defined as an adder 26, for example, for calculating an area of a configuration labelled or with binary density. The density of each pixel is designated by the address data D1, so that the data accumulated in this address is outputted from the memory 20, and the total of the data D3 (now defined as "1") calculated by the adder 26, and the outputted data is fed back to the selector 22 then again accumulated in the address D1. The number of pixel of each density is counted so as to accumulate areas of each labelling number.

The computational portion in Fig.19 is defined as a subtracter 27, to which data D3 and the output of the memory 20 are inputted, and signal S including CS (chip select) and WE (write enable) signals is inputted to the memory 20.

Since an adder is used as a subtracter when a complement is calculated therein, the embodiment in Fig.19 may be equivalent to that in Fig.18. However, when a histogram is to be made flatter by moving the data on convex portion into concave portion, it is necessary to decrease the data on the convex portion. In such a case when a lot of data are decreased, respectively, the subtracter is necessary.

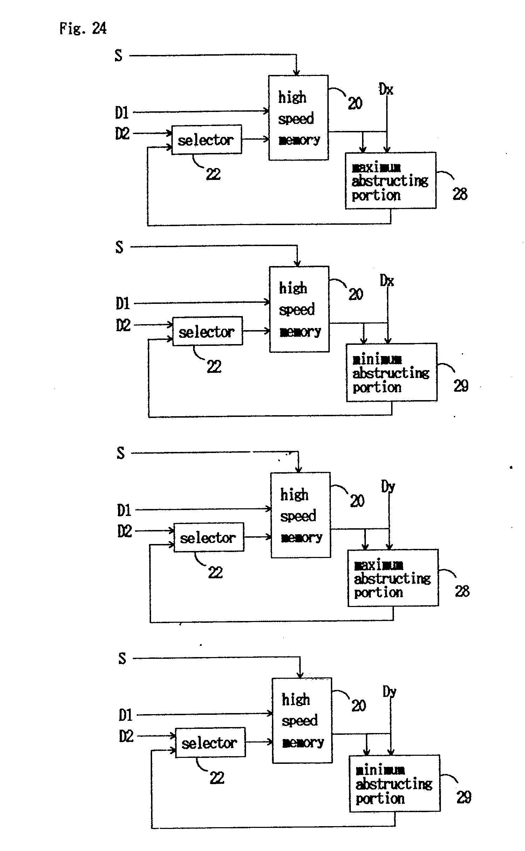

The computational portion in Fig.20 is defined as a maximum abstracting portion 28, and the computational portion in Fig.21 is defined as a minimum abstracting portion 29. The maximum abstracting portion 28 returns a data bigger than another to the memory 20, on comparing the data accumulated in the memory and the data newly introduced. The minimum abstracting portion 29 returns the data smaller than another to the memory 20. These converting portions have various usage, for example, maximum and minimum coordinates on each raster, and maximum and minimum coordinates on each line perpendicular to the raster can be easily abstracted by the construction shown in Fig.24, so that the fillet diameters of x and y coordinate is readily calculated in CPU according to the data abstracted by the portions 28 and 29.

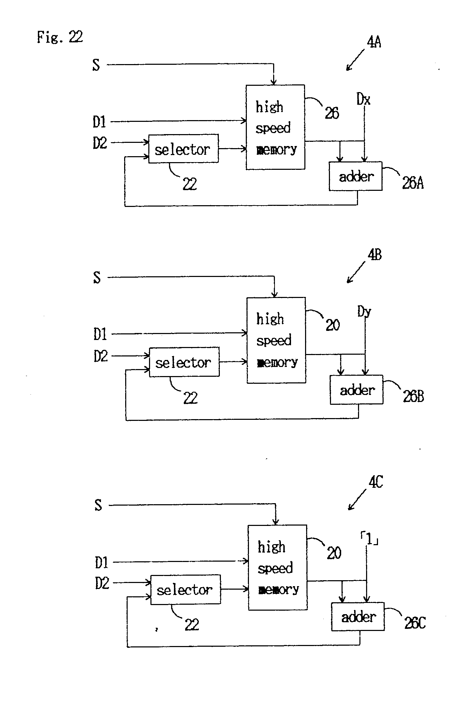

Fig.22 shows a converting portion for calculating the center of gravity of a configuration, which comprises 3 converting portions 4A, 4B and 4C parallelly arranged, each of which is similar to the embodiment in Fig.18. X coordinate Dx, y coordinate Dy and "1" as a data D3 are introduced to adders 8A, 8B, and 8C of the converting portion 4A, 4B and 4C, respectively. The converting portion 4C to which data "1" is inputted is for integration similar to the converting portion in Fig.5, while converting portion 4A and 4B are used for integration of x and y coordinates when the pixel data has a value of "1". The quotient of integration of x coordinates divided by the area of the configuration is equal to the x coordinate of the center of gravity, while the quotient of integration of y coordinates divided by the area is equal to the y coordinate of the center of gravity. This calculation may be excuted either by CPU (central process unit) or by a special purpose hardware. However, it is better to process such complexed calculation by means of CPU. As to the picture labelled, pixel data is classified according to the labelling number and data of the same labelling number is integrated in the same address so that the center of gravity of the area of each labelling number is simultaneously calculated.

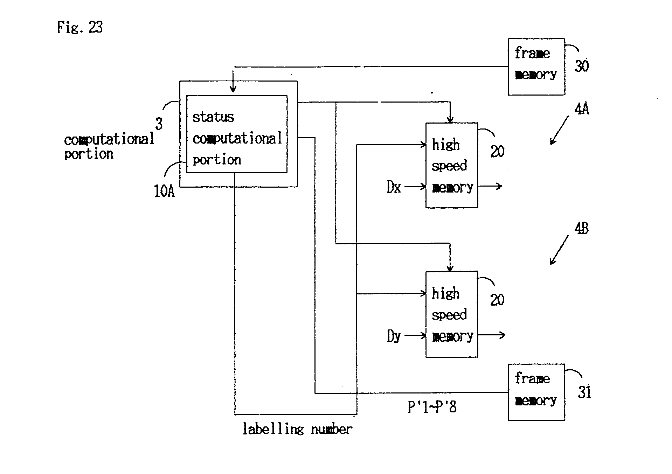

Fig.23 shows a converting portion for obtaining chain codes, which comprises converting portions 4A and 4B. In this embodiment, the lightly computational portion 21 and selector 22 are not shown for easy understanding. X coordinate Dx is inputted to the data input of the converting portion 4A and y coordinate Dy is inputted to the data input of the converting portion 4B, while the status computational portion 10A of the computational portion 3 is connected to the address input and CS and WE input of the memories 20 of each converting portion. The computational portion 3 is connected with frame memories 30 and 31. In the memory 30, the density of each pixel is accumulated. The computational portion 3 obtains from the pixel data above the start point of each labelling area, where the raster enters first into one lebelling area, and the end point of each labelling area, where the raster goes out of one labelling area.

The x coordinate of start points and end points are accumulated in the memory 20 of the converting portion 4A, and the y coordinate thereof are accumulated in the memory 20 of the converting portion 4B. The signal S including CS and WE designates the writing of start points and end points. The computational portion 3 calculates the neighborhood information P'1, P'2, P'3, P'4, P'5, P'6, P'7, and P'8, and then resisters the information into the frame memory 31. Simultaneously, the portion 3 inputs the pixel density or lebelling number of each pixel transmitted from the frame memory 30 to the address input of the memory 20. By these processing, each start point and end point are registered in the address corresponding to the labelling number of the memory 20, while the neighborhood information of each pixel is resistered in the frame memory 31. According to the information registered in the memories 20 and 31, MPU or CPU may immediately access to the start point then obtain chain codes rapidly.

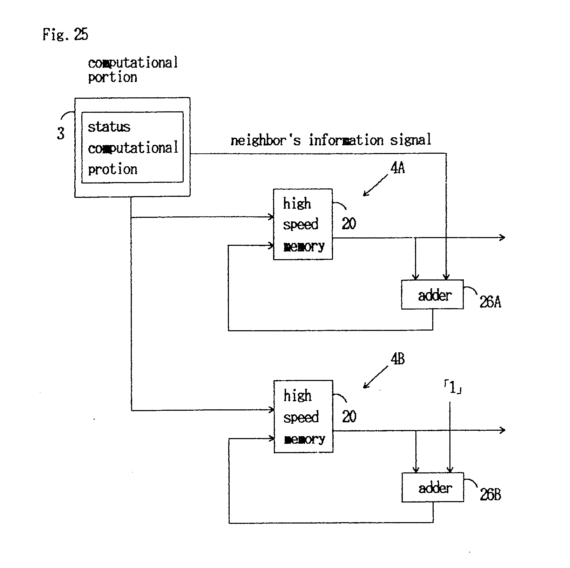

Fig.25 shows a converting portion for calculating the area, peripheral length, circleness (similarity to the geometrical circle) and complexity, which comprises converting portions 4A and 4B (the selector 22 is not shown for easy understanding) to which the numerical computational portion of the computational portion 3 is connected. The computational portion 3 outputs the neighborhood information signal according to the value of each pixel. The neighborhood information signal is, for example, a one bit information indicating whether there is a pixel, within the 4 adjacent pixel (upper, lower, right and left) to the center pixel to be processed, with the different value from the value of the center pixel. The neighborhood information signal is inputted to the adder 26A of the converting portion 4A, the value of the signal is added to the output of the memory 20. The value of the center pixel to be processed is directly inputted to the address input of the memories 20 and 20, each address corresponding to each labelling number is designated. On every designation of the address, the neighborhood information signal is inputted to the adder 26A so that the value of the signal is added in the adder to the data accumulated in the address, and the result of the addition is returned to the address in the memory. Through such processing, the peripheral length according to the boundary pixels is calculated for each labelling area. In the converting portion 4B, the pixel value accumulated in the memory 20 is increased by "1" by means of the adder 26B on every inputting of pixel data to the memory 20. The pixel data in each labelling area are integrated so that the area of each labelling area is calculated. Circleness or roundness and complexity of each labelling area are calculated by MPU according to the perip heral length and the area above.

9

The peripheral length may be calculated by inputting the neighbor's information signal to the CS input of the converting portion 4A and inputting "1" to the adder 26A similar to the input of the adder 26B.

Fig.26 shows a converting portion (the lightly computational portion and the selector of the data input are not shown for easy understanding) for digitizing, classifying the graduation and pseudo-coloring of a picture, in which the computational portion 3 is connected to the address input of the memory 20. To the input of the computational portion 3, the frame memory 30 in which the whole of the pixel values are accumulated is connected, while to the output of the memory 20 another frame memory 31 is connected. In the memory 20, density of pixel or a set of data of R (red), G (green) and B (blue) corresponding to each color code is accumulated, which usually corresponds to the address of the memory 20, while the computational portion 3 calculates the color code or address according to the pixel value accumulated in the memory 30. On binarizing, the pixel value is classified into a color of "0" or "1" by one predetermined threshold level. On classifying graduation, the pixel value is classified into a plurality of color codes by a plurality of predetermined threshold levels. On pseudo-coloring, the memory 20 generates values of R, G and B according to one color code. The value outputted from the memory 20 according to the color code is written in the memory 31.

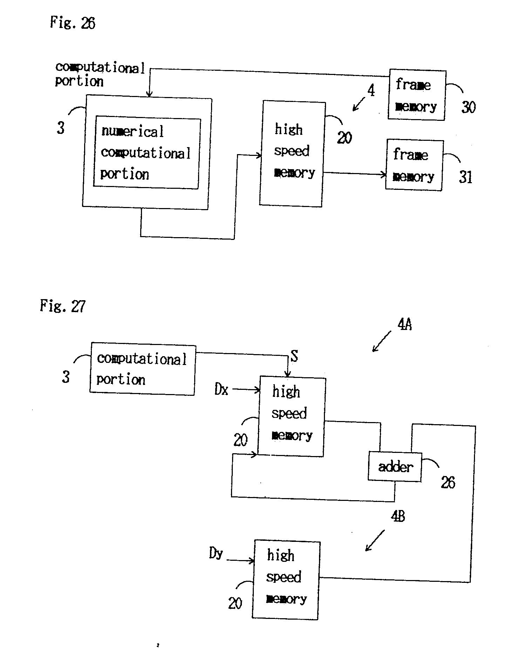

Fig.27 shows a converting portion for calculating n-th moment around the x axis of a binary picture, including the converting portions 4A and 4B similar to that in Fig.18. However, in the converting portion 4A, the selector 22 is not shown for easy understanding, and in the converting portion 4B, the selector 22 and the lightly computational portion 26 are not shown for easy understanding. To the high speed memory 20 of the converting portion 4A, a pixel data is inputted as a signal S including CS and WE from the computational portion 3. When the pixel data is "1", a data is written to the memories 20. X coordinate Dx is inputted as an address data to the memory 20 of the converting portion 4A, while y coordinate Dy is inputted as an address data to the memory 20 of the converting portion 4B. In the memory of portion 1B, n-th power of various values are accumulated, so that the n-th power of Dy is outputted when Dy is inputted. The output of the $Dy^n$ is inputted to the adder 26 of the portion 1A. The adder 26 adds the input $Dy^n$ to the data accumulated in the address Dx in the memory of portion 4A so as to integrate $Dy^n$ corresponding to each Dx. By adding each integrated data $Dy^n$ corresponding to each Dx, n-th moment is calculated.

Fig,28 shows a converting portion for calculating Euler number, which comprises converting portion 4A, 4B, 4C to 4D, each of which is similar to the converting portion in Fig.5. To the address input of the high speed memory 20, the computational portion 3 is connected. The computational portion 3 inputs the pixel value D1 to the memory 20, simultaneously outputs information I including T, F, D and E for calculating Euler number. The information T, F, D and E are transmitted through T abstracting circuit, F abstracting circuit, D abstracting circuit and E abstracting circuit, respectively, into the adder 26 of each of converting portions 4A to 4D, respectively. Each abstracting circuit abstracts the bits in the predetermined position of the information, for example, T is positioned in the leading bits, F is the next, D in the next to F, and E in the trailing bits. Therefore, each abstracting circuits obtains T, F, D or E directly and inputs the parameter to the converting portions 4A, 4B. 4C or 4D, each of which integrates the parameter for each labelling area and accumulates the integration in the high speed memory. Euler number is defined for 4 neighborhood G4 and 8 neighborhood G8 as follows:

$G4 = V-E+F$,

$G8 = V-E-D+T-F$,

where,

V: area of each labelling area.

In the embodiments above, the lightly computational portion is defined as a portion for addition, subtraction, maximum abstracting or minimum abstracting. However, numerical calculation such as absolute calculation, comparison, logic calculation of AND, OR, NAND, NOR, EX-OR, EX-NOR or other processing may be excuted as far as the portion has sufficient process speed for the process needed.

Since the converting portion is provided with a high speed memory, it may be applied to a so-called look-up table for referring data such as RGB data corresponding to a color code, or may be applied to a cash-memory for quickly accumulating the label ling information, on labelling. Such cash-memory may be applied to the labelling. For this application, the neighborhood information is given to the high speed memory and to an address counter for designating the address of the high speed memory. The high speed memory outputs the labelling information in responce to the input of neighborhood information, while the address counter is increased stepwise in responce to the input of neighborhood information. As to the selector, any switching means, such as wired or circuit, may be employed.

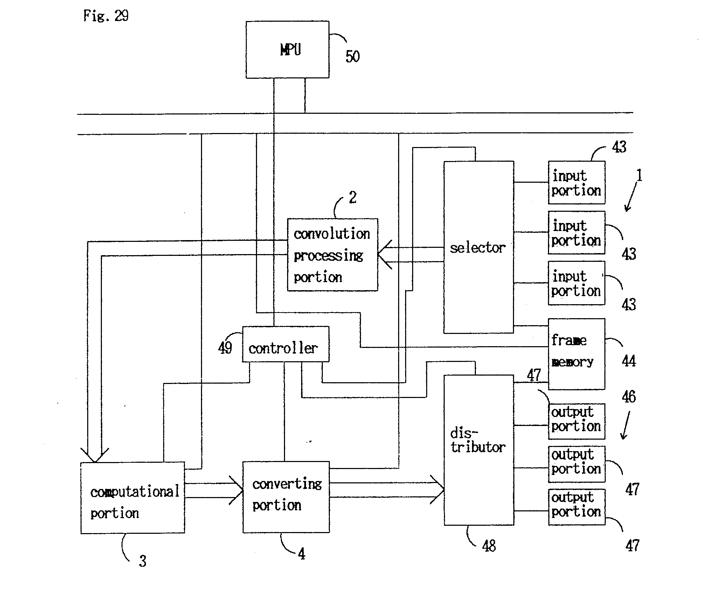

Fig.29 shows another embodiment of the image processing system, comprising input portion 1 which includes various input portions 43, a frame memory 44 and a selector 45 for selecting one of the portions 43 or the frame memory 44, and output portion 46 which includes various output portions 47 and a distributor 48 for distributing data to one of the portions 47.

As to the input portion 43, a VTR camera, an image scanner, a video deck, a laser disk apparatus, a CD-ROM, an optical disk apparatus, a hard-disk system, a floppy disk system, an interface for communication or frame memory may be employed. As far as the input portion accepts data or signal from the image processing system, it may be employed as an output portion. In this embodiment, a controller 49 is connected to the computational portion 3, converting portion 4, selector 45, distributor 48 and frame memory 44 for controlling them. The controller 49 is controlled by a MPU 50. The MPU 50 also processes complexed calculations for which the image processing system is not available. The share of image processing job should be optimized because partia lly excessive job for computational portion 3, converting portion or MPU lower the efficiency of the image processing.

Though the modification or substitution may possible in various way concerning to the present invention, some special embodiments are constructed and described in detail. It is not intended to limit this invention in a special form or condition described but to conclude any variation, substitutions and equivalents within the spirit of the present invention defined in Claims.

## Claims

1. An image processing system, comprising;
an input portion (1) to which pixel data is inputted;
a convolution processing portion (2) processing each set of pixels in a predetermined convolution area so as to output a processed data by every predetermined convolution area;
a computational portion (3), having an output, for calculating a parameter necessary for a image processing according to said processed data from said convolution processing portion; and
a converting portion (4) which comprises a selecting means, having an output, to which said output of said computational portion (3) is inputted, a high speed memory (20), having an output, to which said output of said selecting means (23) is inputted and a lightly computational portion (21) for lightly computation, having an output, to which said output of said high speed memory (20) is inputted and said output of which is inputted to said selecting means (23).

2. An image processing system according to Claim 1, said computational portion (3) comprising:
a status computational portion (10A) for obtaining low number of bits information indicating evaluation of each pixel; and
a numerical computational portion (10) for processing the pixel value as a parameter for necessary image processing.

3. An image processing system according to Claim 1, said selecting means (23) selecting said output of said computational portion (3) or said output of said lightly computational portion (21), alternatively.

4. An image processing system according to Claim 2, said numerical computational portion (10) comprising;
a multiplication portion (11), having an output, to which a plurality of pixel data are inputted and which multiplies said pixel data by multiplier;
a distributing portion (12) having inputs each of which is connected to said output of said multiplication portion, said distributing portion (12) having outputs number of which is not less than that of said inputs and each of said input is introduced to any one or plurality of said outputs; and
an integration portion (13) for numerically integrating said output of said distributing portion (12).

5. An image processing system according to Claim 1, said convolution processing portion (2) comprising;
a plurality of line memories (5,6) delaying said pixel data by one raster, the first of which is connected to said input portion (1), and the second of which and the other thereafter being connecting to the output of the previous line memory; and
a delay portion (7,8,9) for delaying predetermined number of serial pixel data one after one and for outputting said pixel data simultaneously in parallel, said delay portion (7,8,9) connected to output or input of one of said line memories (5,6).

6. An image processing system according to Claim 5, said convolution processing portion (2) comprising;
a first delay portion (7) connected to said input portion (1);
a first line memory (5) connected to said input portion (1);
a second delay portion connected to the output of said first line memory (5);
a second line memory (6) connected to the output of said first line memory (5); and
a third delay portion (9) connected to the output of said second line memory (6).

7. An image processing system according to Claim 1, said lightly computational portion (21) comprising an adder (26).

8. An image processing system according to Claim 1, said lightly computational portion (21) comprising an subtractor (27).

9. An image processing system according to Claim 1, said lightly computational portion (21) comprising a maximum abstracting portion (28).

10. An image processing system according to Claim 1, said lightly computational portion (21) comprising a minimum abstracting portion (29).

11. An image processing system according to Claim 1, said converting portion comprising a plurality of converting portions (4A,4B,4C,4D).

12. An image processing system according to Claim 1, said converting portion (4) further comprising a selecting means (23) connected to the input of said lightly computational portion (21) other than said input connected to said high speed memory, (20) so that said output of said high speed memory (20) is computed together with data selected by said selecting means (23).

13. An image processing system according to Claim 1, said converting portion (4) further comprising a selecting means (23) connected to the address input of said high speed memory (20), so that one of a plurality of data is selectively inputted to said address input.

14. An image processing system according to Claim 12, said converting portion (4) comprising a plurality of converting portions (4A,4B,4C,4D), each having an output, and a selecting means (25) to which said outputs commonly connected and which transmits selected output to said lightly computational portion (21).

15. An image processing system according to Claim 1, said converting portion (4) comprising three converting portions (4A,4B,4C) lightly computational portion (21) of an adder, to said adder of (26A) the first of said converting portions (4A) being inputted x coordinate of said pixel data, to said adder (26B) of the second (4B) of said converting portions being inputted y coordinate of said pixel data, and to said adder (26C) of the third (4C) of said converting portions being increased stepwise, so that the center of gravity of a configuration is calculated.

16. An image processing system according to Claim 1, said converting portion (4) comprising four converting portions (4A,4B,4C,4D) two of which has said lightly computational portion (21) comprising maximum abstracting portion (28) and the other two of which has said lightly computational portion (21) comprising minimum abstracting portion (29), one of said maximum abstracting portions (28) being inputted x coordinate of said pixel data, the coordinate of said pixel data, one of said minimum abstracting portion (29) being inputted x coordinate of said pixel data, the other of said minimum abstracting (29) portion being inputted y coordinate of said pixel data, so that the fillet diameter of a configuration is calculated.

17. An image processing system according to Claim 1, said lightly computational portion (21) comprising an adder, a labelling number being inputted to an address input of said high speed memory (20), said adder increasing data stepwise accumulated in an address corresponding to said labelling number, so that the area of each labelling area is calculated.

18. An image processing system according to Claim 1, said converting portion (4) comprising two converting portions, a labelling number being inputted from said computational portion (3) to an address input of said high speed memory of each of said converting portion (4), x and y coordinates being inputted to the data input of said high speed memory of each of said converting portions, respectively, CS and WE signals being inputted from said computational portion (4) to said high speed memory (20) for determining the writing timing of said x and y coordinate so as to resister the start and end points of each labelling area, said computational portion (3) writing neighborhood information of said pixel data, indicating whether each of 8 neighbor pixels around the center pixel to be processed has same pixel value to that of said center pixel, in a frame memory (30, 31), so that the chain code is readily obtained.

19. An image processing system according to Claim 1, said lightly computational portion (21) comprising an adder (26) to which a neighborhood information indicating whether any one of 4 neighborhood pixels has different value from that of the center pixel outputted from said computational portion (3), a labelling number being inputted to the address input of said high speed memory (20), said neighborhood information being integrated within said adder (16) and being accumulated in a address corresponding to said labelling number, so that the peripheral length of each labelling area is calculated.

20. An image processing system according to Claim 1, said lightly computational portion (21) comprising an adder (26), a labelling number being inputted to an address input of said high speed memory (20) from said computational portion (3), said adder (26) stepwise increases data accumulated in an address corresponding to said labelling number, so that the area of each labelling area is calculated.

21. An image processing system according to Claim 1, said high speed memory (20) accumulating pixel value in each address corresponding to a color code.

22. An image processing system according to Claim 1, further comprising T, F, D, and E abstracting means for abstracting the parameter T, F, D and E for calculating Euler number from a set of plurality of bits, said converting portion comprising four converting portions corresponding to said parameters T, F, D and E, said lightly computational portion of each converting portion comprising an adder which integrates one of said parameters T, F, D and E, each of said high speed memory (20) accumulating one of said parameter integrated, so that Euler number is readily calculated.

0274376

Fig.1

```
┌──────────┐     ┌──────────────┐     ┌──────────────┐     ┌──────────────┐
│ input    │ ──▶ │ convolution  │ ──▶ │ conputational│ ──▶ │ converting   │
│ portion  │     │ processing   │     │ portion      │     │ portion      │
│          │     │ portion      │     │              │     │              │
└──────────┘     └──────────────┘     └──────────────┘     └──────────────┘
       ⌐1               ⌐2                   ⌐3                   ⌐4
```

Fig.2                          Fig.3

| P(i-1),<br>(j-1) | Pi,<br>(j-1) | P(i+1),<br>(j-1) |
|---|---|---|
| P(i-1),<br>j | Pi,j | P(i+1),<br>j |
| P(i-1),<br>(j+1) | Pi,<br>(j+1) | P(i+1),<br>(j+1) |

Fig.5

number of connectedness
index indicating whether the center pixel is to be processed
→ T,F,D and E for  calculating Euler number
comparison signal
etc.

mean density
first state differential
→ second state differential
filter
etc.

Fig.4

P(i+1),(j+1) —— 7A                                     Pi,j

                7B      7

Pi,(j+1) ——☐

                7C

P(i-1),(j+1) ——☐

P(i+1),j —— 8A              5

                8B      8

Pi,j ——☐

                8C

P(i-1),j ——☐

P(i+1),(j-1) —— 9A              6

                9B      9

Pi,(j-1) ——☐

                9C

P(i-1),(j-1) ——☐

0274376

Fig.6

computational portion

conventing portion

Fig.7

D0 D1 D2 D3 D4 D5 ———————— D(n-1)  N

10

11  multiplication portion

D'0 D'1  D'(n-1)  N

selector

12

intergration portion

13

Fig.8

D0 D1 ———————— D(n-1)  14

ROM  11

D'0 D'1 ———————— D'(n-1)

multiplication portion

0274376

Fig.9

Fig.11

Fig.10

10

| | a | b | c | d | e | f | g | h | i |

11 — multiplication portion

| ×1 | ×2 | ×1 | ×2 | ×0 | ×2 | ×1 | ×2 | ×1 |

| a | 2b | c | 2d | 0 | 2f | g | 2h | i |

12 — selector

| a | 2b | c | g | 2h | i | a | 2d | g | c | 2h | i |

13 — integration portion

|a+2b+c-g-2h-i|   |a+2b+g-c-2f-i|

+

|a+2b+c-g-2h-i|  +  |a+2d+g-c-2f-i|

Fig.12

0274376

Fig.13

$$|a+b+c-g-h-i| + |a+d+g-c-f-i|$$

Fig.14

Fig.15

Fig.16

Fig. 17

0274376

Fig. 18

0274376

Fig. 19

Fig. 20

Fig. 21

Fig. 22

Fig. 23

Fig. 24

Fig. 25

computational
portion

status
computational
protion

3

neighbor's information signal

4A

high
speed
memory

20

adder
26A

4B

high
speed
memory

20

「1」

adder
26B

Fig. 26

computational portion

3

numerical computational portion

high speed memory — 20

4

frame memory — 30

frame memory — 31

Fig. 27

3 — computational portion

S

4A

Dx — high speed memory

20

adder — 26

4B

Dy — high speed memory

20

Fig. 28

computational portion

status computational portion

3

I(T.F.D.E)

4A

D1

high speed memory

20

T

+

26

40

4B

D1

high speed memory

20

F

+

26

41

4C

D1

high speed memory

20

D

+

26

42

4D

D1

high speed memory

20

E

+

26

43

Fig. 29